# EUROPEAN PATENT APPLICATION

(11) **EP 4 191 717 A1**
(43) Date of publication of application: **07.06.2023**
(21) Application number: 21848676.9
(22) Date of filing: 27.07.2021
(51) Int. Cl.: H01M 8/04, H01M 8/04313, H01M 8/0438, H01M 8/0444, H01M 8/04664, H01M 8/04746, H01M 8/04955, H01M 8/249

(54) **FUEL CELL ELECTRICITY GENERATING SYSTEM**

(30) Priority: 30.07.2020 JP 2020129613
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: MATSUDA, Shohei, Kawasaki-shi, Kanagawa 212-0013 (JP)
(74) Representative: Hoffmann Eitle
(86) International application number: PCT/JP2021/027749
(87) International publication number: WO 2022/025063

(57) **Abstract**

A fuel cell power generation system according to an embodiment includes: a first fuel cell module installed in a first cell installation compartment; a second fuel cell module installed in a second cell installation compartment partitioned from the first cell installation compartment; and a ventilation apparatus. The first fuel cell module is supplied with a fuel gas by a first supply line. The second fuel cell module is supplied with a fuel gas by a second supply line. A first shutoff valve, which is capable of shutting off the first supply line, is provided outside the first cell installation compartment and the second cell installation compartment. A second shutoff valve, which is capable of shutting off the second supply line, is provided outside the first cell installation compartment and the second cell installation compartment.

## Description

### FIELD

The present disclosure relates generally to a fuel cell power generation system.

### BACKGROUND

Fuel cell power generation systems have been put into practical use as power generation systems for stationary applications and for automobiles, because of their high environmental friendliness and high power generation efficiency during power generation. In particular, their wide use as a device that converts hydrogen into power is expected in the future. Use of hydrogen as storage means for renewable energy, as typified by solar power generation and wind power generation, is also expected recently. Namely, hydrogen is produced by water electrolysis using renewable energy, and the produced hydrogen is stored. A fuel cell can be used to generate power with the use of the stored hydrogen. Thus, a fuel cell power generation system is considered as one of important energy systems for society.

Until now, a fuel cell ranging from several hundreds W to 200 kW class has been packaged and installed outdoors or mounted on an automobile. A fuel cell system uses a hydrogen gas or a mixture gas containing hydrogen as a fuel gas. A fuel cell power generation system with a reformer produces a hydrogen gas from a hydrocarbon gas, such as a city gas, and uses it as a fuel gas. Such a fuel gas is supplied through a supply pipe for supplying a fuel gas. A location where a device for supplying a fuel gas is installed is always ventilated. In the event of fuel gas leakage, the fuel gas is prevented from stagnating and is maintained at a concentration below explosion limit. For this purpose, upon occurrence of malfunction such as stop of ventilation, a shutoff valve provided on the supply pipe for fuel gas is closed. Conditions for closing the shutoff valve include stop of ventilation, detection of fuel gas leakage by a flammable gas detector, detection of fire, etc. In order to prevent exposure to such hazardous conditions, a safety standard for fuel cell power generation system has been established.

On the other hand, in a hydrogen society where hydrogen is used as one of energy media, a power generation system is required to have larger output, such as several MWs, than before. When installed in an urban area, a power generation system is required to be used as a power equipment for a large building. In addition, a fuel cell power generation system is also expected to be a solution for reducing CO₂ emissions from ships. When installed in a ship, a fuel cell power generation system is required to have a large output ranging from several hundreds kW to several MWs for a domestic vessel, or to have a large output ranging from several tens MW for an ocean-going vessel.

A fuel cell power generation system has a high power generation efficiency regardless of output size. Thus, it is advantageous for a fuel cell power generation system with a large output to have fuel cell modules that are installed in parallel, each fuel cell module having a power generation output ranging from several tens kW to several hundreds kW excellent in mass production. The fuel cell power generation system composed of a plurality of fuel cell modules can have improved reliability as an overall system. Such a fuel cell power generation system can be applied as a highly reliable power source used in an urban area, and can also be applied as a main power source of a ship.

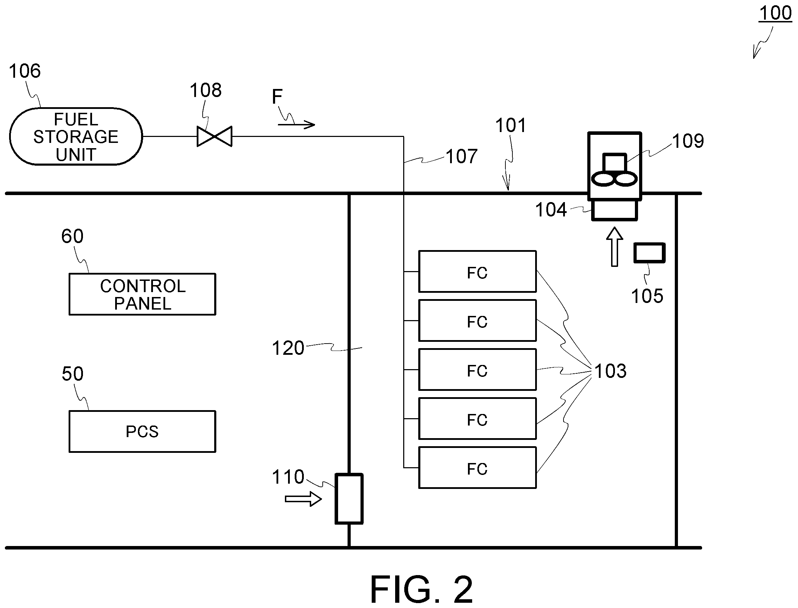

When a large fuel cell power generation system of several MWs class is installed in a building or a ship, a plurality of fuel cell modules are installed in a fuel cell installation compartment with a ventilation equipment, as described above (see Fig. 2 described below). A fuel gas from a fuel storage unit, which is installed outside the fuel cell installation compartment, is supplied to the fuel cell modules through a supply pipe having the aforementioned shutoff valve.

However, when the shutoff valve is closed upon occurrence of the aforementioned malfunction, the supply of a fuel gas to all the fuel cell modules is stopped. This stops the operation of all the fuel cell modules, so that the fuel cell power generation system can no more continue power generation. For example, when the power generated by the fuel cell power generation system is used as a highly reliable power source, or when the power is used as power of a moving vehicle such as a ship, power supply continuity is required. Thus, the power generation continuity of the fuel cell power generation system is required to be improved.

[Non-patent Document 1]
"Safety Guidelines for Hydrogen Fuel Cell Vessels," March 2018, Ministry of Land, Infrastructure, Transport and Tourism, [retrieved July 16, 2020], Internet < https://www.mlit.go.jp/common/001330177.pdf>

The present disclosure has been made in view of these circumstances. The object of the present disclosure is to provide a fuel cell power generation system comprising a plurality of fuel cell modules, which is capable of having improved power generation continuity.

A fuel cell power generation system according to an embodiment comprises: a first fuel cell module installed in a first cell installation compartment; a second fuel cell module installed in a second cell installation compartment partitioned from the first cell installation compartment; and a ventilation apparatus that ventilates the first cell installation compartment and the second cell installation compartment. The first fuel cell module is supplied with a fuel gas by a first supply line. The second fuel cell module is supplied with a fuel gas by a second supply line. A first shutoff valve, which is capable of shutting off the first supply line, is provided outside the first cell installation compartment and the second cell installation compartment. A second shutoff valve, which is capable of shutting off the second supply line, is provided outside the first cell installation compartment and the second cell installation compartment.

The present disclosure can improve the power generation continuity of a fuel cell power generation system comprising a plurality of fuel cell modules.

### BRIEF DESCRIPTION OF THE DRAWINGS

Fig. 1 is a view showing a fuel cell power generation system according to an embodiment of the present disclosure.
Fig. 2 is a view showing a fuel cell power generation system as a comparative example.
Fig. 3 is a view showing a modification example of Fig. 1.
Fig. 4 is a view showing another modification example of Fig. 1.
Fig. 5 is a view showing another modification example of Fig. 1.

### DETAILED DESCRIPTION

A fuel cell power generation system according to this embodiment is described hereunder with reference to the drawings.

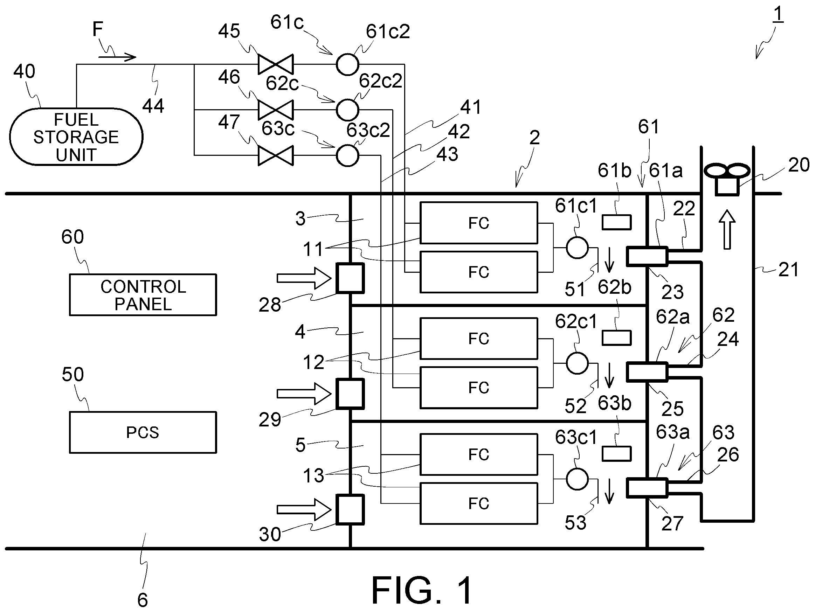

First, the fuel cell power generation system 1 according to this embodiment is described using Fig. 1. The fuel cell power generation system 1 according to this embodiment may be mounted on a building, a moving vehicle, etc. The building may be a condominium, an office building, etc. In this case, generated power of the fuel cell power generation system 1 may be used to drive an elevator, to illuminate the building, to air-condition the building, etc. The moving vehicle may be a ship, an automobile, a rail vehicle, etc. In this case, the generated power of the fuel cell power generation system 1 may be used to drive the moving vehicle, to illuminate the moving vehicle, to air-condition the moving vehicle, etc.

As shown in Fig. 1, the fuel cell power generation system 1 according to this embodiment comprises a plurality of fuel cell modules 11 to 13, a ventilation fan 20, a fuel storage unit 40, a first supply line 41, a second supply line 42, a third supply line 43, a first shutoff valve 45, a second shutoff valve 46, a third shutoff valve 47, a power converter 50, and a control panel 60.

The fuel cell modules 11 to 13 are installed in cell installation compartments 3 to 5 partitioned in a housing 2 of a building or a moving vehicle. The housing 2 has the cell installation compartments 3 to 5 in which the fuel cell modules are installed, and a facility installation compartment 6 partitioned from the cell installation compartments 3 to 5. The aforementioned power converter 50 (power conditioning system, PCS) and the control panel 60 are installed in the facility installation compartment 6. The power converter 50 is a device for converging DC power obtained by power generated by the fuel cell modules 11 to 13 into AC power. The control panel 60 controls the power converter 50. Another function of the control panel 60 is described later.

Each of the fuel cell modules 11 to 13 is a module that generates power using a fuel gas and an oxidant gas. The fuel gas may be a hydrogen gas, a mixture gas containing a hydrogen gas, etc. The oxidant gas may be air, etc. Although not shown, each fuel cell module 11 to 13 may include a cell stack, a manifold, and a storage container. The cell stack includes single cells of fuel cell stacked on one another. In each single cell, the fuel gas and the oxidant gas react with each other to generate power. The manifold is a member for introducing the fuel gas and the oxidant gas to each single cell, and for discharging them from each single cell. The storage container stores the cell stack and the manifold.

In this embodiment, an example in which the housing 2 has the three cell installation compartments 3 to 5, and the fuel cell power generation system 1 comprises the six fuel cell modules 11 to 13 is described.

Three cell installation compartments 3 to 5 include a first cell installation compartment 3, a second cell installation compartment 4, and a third cell installation compartment 5. The respective cell installation compartments 3 to 5 are partitioned from one another by walls constituting the housing 2 of the building or the moving vehicle, so as to form one closed room. The first cell installation compartment 3 and the second cell installation compartment 4 are adjacent to each other, and the second installation compartment 4 and the third cell installation compartment 5 are adjacent to each other.

Two fuel cell modules are installed in each of the cell installation compartments 3 to 5. Namely, two first fuel cell modules 11 are installed in the first cell installation compartment 3, two second fuel cell modules 12 are installed in the second cell installation compartment 4, and two third fuel cell modules 13 are installed in the third cell installation compartment 5. The respective fuel cell modules 11 to 13 may have the same structure.

The ventilation fan 20 is an example of a ventilation apparatus. The ventilation fan 20 is configured to ventilate the first cell installation compartment 3, the second cell installation compartment 4, and the third cell installation compartment 5. The ventilation fan 20 is located on an outlet side of the respective cell installation compartments 3 to 5. Thus, a gas in each cell installation compartment 3 to 5 is suctioned by the ventilation fan 20. A pressure in each cell installation compartment 3 to 5 is lower than a pressure outside each cell installation compartment 3 to 5. For example, a pressure in each cell installation compartment 3 to 5 may be lower than a pressure in the facility installation compartment 6. In addition, a pressure in each cell installation compartment 3 to 5 may be lower than a pressure outside each cell installation compartment 3 to 5 and also outside the facility installation compartment 6.

The ventilation fan 20 is provided on a common discharge line 21. The common discharge line 21 and the first cell installation compartment 3 are connected by a first discharge line 22. The first discharge line 22 extends from a first exhaust port 23 provided in the first cell installation compartment 3 to the common discharge line 21. A gas in the first cell installation compartment 3 is discharged outside through the first discharge line 22 and the common discharge line 21.

Similarly, the common discharge line 21 and the second cell installation compartment 4 are connected by a second discharge line 24. The second discharge line 24 extends from a second exhaust port 25 provided in the second cell installation compartment 4 to the common discharge line 21. A gas in the second cell installation compartment 4 is discharged outside through the second discharge line 24 and the common discharge line 21.

The common discharge line 21 and the third cell installation compartment 5 are connected by a third discharge line 26. The third discharge line 26 extends from a third exhaust port 27 provided in the third cell installation compartment 5 to the common discharge line 21. A gas in the third cell installation compartment 5 is discharged outside through the third discharge line 26 and the common discharge line 21.

The first cell installation compartment 3 is provided with a first intake port 28. The first intake port 28 introduces outside air into the first cell installation compartment 3. By driving the aforementioned ventilation fan 20, outside air is introduced into the first cell installation compartment 3. Fig. 1 shows that a gas in the facility installation compartment 6 is introduced as outside air into the first cell installation compartment 3, but the present disclosure is not limited thereto. Similarly, the second cell installation compartment 4 is provided with a second intake port 29, and the third cell installation compartment 5 is provided with a third intake port 30. The facility installation compartment 6 may be provided with an intake port (not shown) for introducing air outside the facility installation compartment 6.

The fuel storage unit 40 is an example of a fuel supply source. The fuel storage unit 40 stores the fuel gas. The fuel storage unit 40 supplies the fuel gas stored therein to the first supply line 41, the second supply line 42, and the third supplied line 43, respectively. The fuel gas may be stored as a gas, or may be liquefied and stored. The fuel storage unit 40 is installed outside the respective cell installation compartments 3 to 5 and outside the facility installation compartment 6.

The first supply line 41 supplies the first fuel cell modules 11 with the fuel gas (see symbol F shown in Fig. 1). More specifically, the first supply line 41 extends from the fuel storage unit 40 installed outside the respective fuel installation compartments 3 to 5 to the respective first fuel cell modules 11. The first supply line 41 branches and connects to the respective first fuel cell modules 11.

The second supply line 42 supplies the second fuel cell modules 12 with the fuel gas. More specifically, the second supply line 42 extends from the fuel storage unit 40 installed outside the respective fuel installation compartments 3 to 5 to the respective second fuel cell modules 12. The second supply line 42 branches and connects to the respective second fuel cell modules 12.

The third supply line 43 supplies the third fuel cell modules 13 with the fuel gas. More specifically, the third supply line 43 extends from the fuel storage unit 40 installed outside the respective fuel installation compartments 3 to 5 to the respective third fuel cell modules 13. The third supply line 43 branches and connects to the respective third fuel cell modules 13.

The first supply line 41, the second supply line 42, and the third supply line 43 are connected to the fuel storage unit 40 through a common supply line 44. The fuel gas stored in the fuel storage unit 40 passes through the common supply line 44 to be supplied to the first supply line 41, the second supply line 42, and the third supply line 43, respectively. The fuel gas is supplied to the respective fuel cell modules 11 to 13 from the fuel storage unit 40 through the respective supply lines 41 to 44 by driving a not-shown drive unit (e.g., blower).

Although not shown, the respective fuel cell modules 11 to 13 are supplied with air as the oxidant gas. This causes a reaction between the fuel gas and the oxidant gas to generate a flow of electrons in the single cells of the respective fuel cell modules 11 to 13. In this manner, generated power is obtained.

As shown in Fig. 1, the first shutoff valve 45 is located outside the respective cell installation compartments 3 to 5 and outside the facility installation compartment 6. The first shutoff valve 45 is provided on the first supply line 41. The first shutoff valve 45 is configured to be openable and closable, and is configured to be capable of shutting off the first supply line 41. More specifically, while the first shutoff valve 45 is being opened, the fuel gas is supplied to the first fuel cell modules 11. While the first shutoff valve 45 is being closed, the supply of the fuel gas is stopped. The first shutoff valve 45 is configured to be electrically operated.

The second shutoff valve 46 is located outside the respective cell installation compartments 3 to 5 and outside the facility installation compartment 6. The second shutoff valve 46 is provided on the second supply line 42. The second shutoff valve 46 is configured to be openable and closable, and is configured to be capable of shutting off the second supply line 42. More specifically, while the second shutoff valve 46 is being opened, the fuel gas is supplied to the second fuel cell modules 12. While the second shutoff valve 46 is being closed, the supply of the fuel gas is stopped. The second shutoff valve 46 is configured to be electrically operated.

The third shutoff valve 47 is located outside the respective cell installation compartments 3 to 5 and outside the facility installation compartment 6. The third shutoff valve 47 is provided on the third supply line 43. The third shutoff valve 47 is configured to be openable and closable, and is configured to be capable of shutting off the third supply line 43. More specifically, while the third shutoff valve 47 is being opened, the fuel gas is supplied to the third fuel cell modules 13. While the third shutoff valve 47 is being closed, the supply of the fuel gas is stopped. The third shutoff valve 47 is configured to be electrically operated.

The fuel cell power generation system 1 according to this embodiment further comprises a first malfunction detection device 61, a second malfunction detection device 62, and a third malfunction detection device 63.

The first malfunction detection device 61 detects a malfunction occurring in the first cell installation compartment 3. The first malfunction detection device 61 may include, as a device corresponding to a first control function of the control panel 60, which is described later, at least one of a first ventilation flow rate detector 61a, a first fuel gas detector 61b, or a first fuel gas leakage detector 61c. The first malfunction detection device 61 may include any one of the first ventilation flow rate detector 61a, the first fuel gas detector 61b, and the first fuel gas leakage detector 61c, or may include any two of them or all of them.

The first ventilation flow rate detector 61a detects a ventilation flow rate of the first cell installation compartment 3. The first ventilation flow rate detector 61a may be located on the aforementioned first exhaust port 23 of the first cell installation compartment 3. Alternatively, the first ventilation flow rate detector 61a may be located on the aforementioned first discharge line 22. The first ventilation flow rate detector 61a may detect, as a ventilation flow rate, a discharge flow rate from the first cell installation compartment 3.

The first fuel gas detector 61b detects the fuel gas in an atmosphere of the first cell installation compartment 3. For example, the first fuel gas detector 61b may detect a concentration of the fuel gas. The fuel gas detector 61b may be located on the vicinity of the first exhaust port 23 in the first cell installation compartment 3.

The first fuel gas leakage detector 61c detects leakage of the fuel gas from the first supply line 41 or the first fuel cell module 11. The first fuel gas leakage detector 61c may have any structure as long as it can detect the fuel gas. For example, the first fuel gas leakage detector 61c may detect leakage of the fuel gas based on a generated current of the first fuel cell module 11 and a supply amount of the fuel gas to the first fuel cell module 11. The generated current is in proportional to a consumption amount of the fuel gas consumed by the first fuel cell module 11. Thus, leakage of the fuel gas can be detected by calculating a difference between the supply amount of the fuel gas and the consumption amount thereof. In this case, the first fuel gas leakage detector 61c may include a first ammeter 61c1 that measures a generated current of the first fuel cell module 11, and a first fuel gas flowmeter 61c2 that measures a flow rate of the fuel gas supplied to the first fuel cell module 11. The first ammeter 61c1 may be provided on a first power supply line 51 that supplies generated power of the first fuel cell module 11 to the power converter 50. In Fig. 1, the first ammeter 61c1 measures a sum of generated currents of the two first fuel cell modules 11, but the first ammeter 61c1 may measure a generated current of each of the first fuel cell modules 11. The first fuel gas flowmeter 61c2 may be provided on the first supply line 41 at a position outside or inside the first cell installation compartment 3, or may be provided on a fuel inlet in the first fuel cell module 11. In Fig. 1, the first fuel gas flowmeter 61c2 is located upstream the branch point of the first supply line 41, but the first fuel gas flowmeter 61c2 may be located downstream the branch point.

The second malfunction detection device 62 detects a malfunction occurring in the second cell installation compartment 4. The second malfunction detection device 62 may include, as a device corresponding to the first control function of the control panel 60, at least one of a second ventilation flow rate detector 62a, a second fuel gas detector 62b, or a second fuel gas leakage detector 62c. The second malfunction detection device 62 may include any one of the second ventilation flow rate detector 62a, the second fuel gas detector 62b, and the second fuel gas leakage detector 62c, or may include any two of them or all of them.

The second ventilation flow rate detector 62a detects a ventilation flow rate of the second cell installation compartment 4. The second ventilation flow rate detector 62a may have a structure similar to that of the aforementioned first ventilation flow rate detector 61a. The second ventilation flow rate detector 62a may be located on the aforementioned second exhaust port 25 of the second cell installation compartment 4. Alternatively, the second ventilation flow rate detector 62a may be located on the aforementioned second discharge line 24. The second ventilation flow rate detector 62a may detect, as a ventilation flow rate, a discharge flow rate from the second cell installation compartment 4.

The second fuel gas detector 62b detects the fuel gas in an atmosphere of the second cell installation compartment 4. The second fuel gas detector 62b may have a structure similar to that of the aforementioned first fuel gas detector 61b. The second fuel gas detector 62b may be located on the vicinity of the second exhaust port 25 in the second cell installation compartment 4.

The second fuel gas leakage detector 62c detects leakage of the fuel gas from the second supply line 42 or the second fuel cell module 12. The second fuel gas leakage detector 62c may have any structure as long as it can detect the fuel gas. Similarly to the aforementioned first fuel gas leakage detector 61c, the second fuel gas leakage detector 62c may include a second ammeter 62c1 and a second fuel gas flowmeter 62c2. In this case, the second ammeter 62c1 may be provided on a second power supply line 51 that supplies generated power of the second fuel cell module 12 to the power converter 50. The second fuel gas flowmeter 62c2 may be provided on the second supply line 42 at a position outside or inside the second cell installation compartment 4, or may be provided in the second fuel cell module 12.

The third malfunction detection device 63 detects a malfunction occurring in the third cell installation compartment 5. The third malfunction detection device 63 may include, as a device corresponding to the first control function of the control panel 60, at least one of a third ventilation flow rate detector 63a, a third fuel gas detector 63b, or a third fuel gas leakage detector 63c. The third malfunction detection device 63 may include any one of the third ventilation flow rate detector 63a, the third fuel gas detector 63b, and the third fuel gas leakage detector 63c, or may include any two of them or all of them.

The third ventilation flow rate detector 63a detects a ventilation flow rate of the third cell installation compartment 5. The third ventilation flow rate detector 63a may have a structure similar to that of the aforementioned first ventilation flow rate detector 61a. The third ventilation flow rate detector 63a may be located on the aforementioned third exhaust port 27 of the third cell installation compartment 5. Alternatively, the third ventilation flow rate detector 63a may be located on the aforementioned third discharge line 26. The third ventilation flow rate detector 63a may detect, as a ventilation flow rate, a discharge flow rage from the third cell installation compartment 5.

The third fuel gas detector 63b detects the fuel gas in an atmosphere of the third cell installation compartment 5. The third fuel gas detector 63b may have a structure similar to that of the aforementioned first fuel gas detector 61b. The third fuel gas detector 63b may be located on the vicinity of the third exhaust port 27 in the third cell installation compartment 5.

The third fuel gas leakage detector 63c detects leakage of the fuel gas from the third supply line 43 or the third fuel cell module 13. The third fuel gas leakage detector 63c my have any structure as long as it can detect the fuel gas. Similarly to the aforementioned first fuel gas leakage detector 61c, the third fuel gas leakage detector 63c may include a third ammeter 63c1 and a third fuel gas flowmeter 63c2. In this case, the third ammeter 63c1 may be provided on a third power supply line 53 that supplies generated power of the third fuel cell module 13 to the power converter 50. The third fuel gas flowmeter 63c2 may be provided on the third supply line 43 at a position outside or inside the third cell installation compartment 5, or may be provided on a fuel inlet in the second fuel cell module 12.

The control panel 60 controls the aforementioned shutoff valves 45 to 47. The control panel 60 is an example of a control unit. The control panel 60 in this embodiment is configured to individually close the shutoff valves 45 to 47 corresponding to the cell installation compartments 3 to 5 whose malfunction is detected by the aforementioned malfunction detection devices 61 to 63.

The control panel 60 according to this embodiment may have the first control function. The first control function may be a function by which, when a malfunction of one of the respective cell installation compartments 3 to 5 is detected and no malfunction of the other cell installation compartments 3 to 5 is detected, the shutoff valve 45 to 47 corresponding to the cell installation compartment 3 to 5 having the detected malfunction is closed, and the shutoff valves 45 to 47 of the other cell installation compartments 3 to 5 without any detected malfunction are kept open.

More specifically, when a malfunction of the first cell installation compartment 3 is detected by the first malfunction detection device 61, the control panel 60 closes the first shutoff valve 45 in accordance with the first control function.

For example, when a ventilation flow rate of the first cell installation compartment 3, which is detected by the first ventilation flow rate detector 61a, is lower than a predetermined reference value, the control panel 60 may determine that the first cell installation compartment 3 has a malfunction and may close the first shutoff valve 45. In addition, for example, when the fuel gas is detected by the first fuel gas detector 61b, the control panel 60 may determine that the first cell installation compartment 3 has a malfunction and may close the first shutoff valve 45. When the first fuel gas detector 61b detects a concentration of the fuel gas, the control panel 60 may determine that the fuel gas is present in the atmosphere if the detected concentration of the fuel gas is higher than a predetermined reference value. In addition, for example, when leakage of the fuel gas is detected by the first fuel gas leakage detector 61c, the control panel 60 may determine that the first cell installation compartment 3 has a malfunction and may close the first shutoff valve 45. When the first fuel gas leakage detector 61c includes the first ammeter 61c1 and the first fuel gas flowmeter 61c2, a consumption amount of the fuel gas may be calculated from a current value. Then, when a difference between a supply amount of the fuel gas and the consumption amount is larger than a predetermined reference value, the control panel 60 may determine that the fuel gas leaks.

The control panel 60 according to this embodiment has the first control function. In this case, when a malfunction of the first cell installation compartment 3 is detected by the first malfunction detection device 61 and no malfunction of the second cell installation compartment 4 is detected, the control panel 60 may close the first shutoff valve 45 and may keep the second shutoff valve 46 open. Similarly, when a malfunction of the first cell installation compartment 3 is detected by the first malfunction detection device 61 and no malfunction of the third cell installation compartment 5 is detected, the control panel 60 may close the first shutoff valve 45 and may keep the third shutoff valve 47 open.

When a malfunction of the second cell installation compartment 4 is detected by the second malfunction detection device 62, the control panel 60 closes the second shutoff valve 46 in accordance with the first control function.

For example, when a ventilation flow rate of the second cell installation compartment 4, which is detected by the second ventilation flow rate detector 62a, is lower than a predetermined reference value, the control panel 60 may determine that the second cell installation compartment 4 has a malfunction and may close the second shutoff valve 46. In addition, for example, when the fuel gas is detected by the second fuel gas detector 62b, the control panel 60 may determine that the second cell installation compartment 4 has a malfunction and may close the second shutoff valve 46. In addition, for example, when leakage of the fuel gas is detected by the second fuel gas leakage detector 62c, the control panel 60 may determine that the second cell installation compartment 4 has a malfunction and may close the second shutoff valve 46.

As described above, the control panel 60 according to this embodiment has the first control function. In this case, when a malfunction of the second cell installation compartment 4 is detected by the second malfunction detection device 62 and no malfunction of the first cell installation compartment 3 is detected, the control panel 60 may close the second shutoff valve 46 and may keep the first shutoff valve 45 open. Similarly, when a malfunction of the second cell installation compartment 4 is detected by the second malfunction detection device 62 and no malfunction of the third cell installation compartment 5 is detected, the control panel 60 may close the second shutoff valve 46 and may keep the third shutoff valve 47 open.

When a malfunction of the third cell installation compartment 5 is detected by the third malfunction detection device 63, the control panel 60 closes the second shutoff valve 46 in accordance with the first control function.

Similarly, for example, when a ventilation flow rate of the third cell installation compartment 5, which is detected by the third ventilation flow rate detector 63a, is lower than a predetermined reference value, the control panel 60 may determine that third cell installation compartment 5 has a malfunction and may close the third shutoff valve 47. In addition, for example, when the fuel gas is detected by the third fuel gas detector 63b, the control panel 60 may determine that third cell installation compartment 5 has a malfunction and may close the third shutoff valve 47. In addition, for example, when leakage of the fuel gas is detected by the third fuel gas leakage detector 63c, the control panel 60 may determine that third cell installation compartment 5 has a malfunction and may close the third shutoff valve 47.

As described above, the control panel 60 according to this embodiment has the first control function. In this case, when a malfunction of the third cell installation compartment 5 is detected by the third malfunction detection device 63 and no malfunction of the first cell installation compartment 3 is detected, the control panel 60 may close the third shutoff valve 47 and may keep the first shutoff valve 45 open. Similarly, when a malfunction of the third cell installation compartment 5 is detected by the third malfunction detection device 63 and no malfunction of the second cell installation compartment 4 is detected, the control panel 60 may close the third shutoff valve 47 and may keep the second shutoff valve 46 open.

Next, an operation method of the fuel cell power generation system 1 in this embodiment as structured above is described.

Upon operation, the respective shutoff valves 45 to 47 are opened to supply the fuel gas from the fuel storage unit 40 to the respective fuel cell modules 11 to 13, so that power is generated by the fuel cell modules 11 to 13. For this while, the ventilation fan 20 is driven to ventilate the respective cell installation compartments 3 to 5. More specifically, the gas in the first cell installation compartment 3 is sucked by the ventilation fan 20 to be discharged from the first cell installation compartment 3. Thus, the pressure in the first cell installation compartment 3 becomes lower than the pressure in the facility installation compartment 6, so that the gas in the facility installation compartment 6 is sucked from the first intake port 28 into the first cell installation compartment 3. Similarly, the gas in the second cell installation compartment 4 is sucked by the ventilation fan 20 to be discharged from the second cell installation compartment 4, and the gas in the facility installation compartment 6 is sucked from the second intake port 29 into the first cell installation compartment 4. The gas in the third cell installation compartment 5 is sucked by the ventilation fan 20 to be discharged from the third cell installation compartment 5, and the gas in the facility installation compartment 6 is sucked from the third intake port 30 into the third cell installation compartment 5.

During operation, the first ventilation flow rate detector 61a constituting the first malfunction detection device 61 detects a ventilation flow rate of the first cell installation compartment 3. More specifically, when a detected ventilation flow rate is lower than a predetermined reference value, the control panel 60 determines that the first cell installation compartment 3 has a malfunction and closes the first shutoff valve 45. This stops the supply of the fuel gas to the first fuel cell modules 11.

In addition, during operation, the first fuel gas detector 61b detects the fuel gas in the atmosphere of the first cell installation compartment 3. More specifically, when the fuel gas is detected, the control panel 60 determines that the first cell installation compartment 3 has a malfunction and closes the first shutoff valve 45. This stops the supply of the fuel gas to the first fuel cell modules 11.

In addition, during operation, the first fuel gas leakage detector 61c detects leakage of the fuel gas in the first cell installation compartment 3. More specifically, when leakage of the fuel gas is detected, the control panel 60 determines that the first cell installation compartment 3 has a malfunction and closes the first shutoff valve 45. This stops the supply of the fuel gas to the first fuel cell modules 11.

In this manner, when a malfunction of the first cell installation compartment 3 is detected, the supply of the fuel gas to the first fuel cell modules 11 can be stopped. When no malfunction of the second cell installation compartment 4 is detected, the second shutoff valve 46 is kept open so that the supply of the fuel gas to the second fuel cell modules 12 can be continued. When no malfunction of the third cell installation compartment 5 is detected, the third shutoff valve 47 is kept open so that the supply of the fuel gas to the third fuel cell modules 13 can be continued. When a malfunction is detected only in the first cell installation compartment 3, only the first shutoff valve 45 may be closed.

When a malfunction of the second cell installation compartment 4 is detected, the supply of the fuel gas to the second fuel cell modules 12 can be stopped similarly. When no malfunction of the first cell installation compartment 3 is detected, the first shutoff valve 45 is kept open so that the supply of the fuel gas to the first fuel cell modules 11 can be continued. When no malfunction of the third cell installation compartment 5 is detected, the third shutoff valve 47 is kept open so that the supply of the fuel gas to the third fuel cell modules 13 can be continued. When a malfunction is detected only in the second cell installation compartment 4, only the second shutoff valve 46 may be closed.

When a malfunction of the third cell installation compartment 5 is detected, the supply of the fuel gas to the third fuel cell modules 13 can be stopped similarly. When no malfunction of the first cell installation compartment 3 is detected, the first shutoff valve 45 is kept open so that the supply of the fuel gas to the first fuel cell modules 11 can be continued. When no malfunction of the second cell installation compartment 4 is detected, the second shutoff valve 46 is kept open so that the supply of the fuel gas to the second fuel cell modules 12 can be continued. When a malfunction is detected only in the third cell installation compartment 5, only the third shutoff valve 47 may be closed.

A comparative example of the fuel cell power generation system 1 according to this embodiment is described using Fig. 2.

In a fuel cell power generation system 100 shown in Fig. 2, a housing 101 has one cell installation compartment 102. The cell installation compartment 102 is not partitioned into a plurality of compartments. Five fuel cell modules 103 are installed in the one cell installation compartment 102. One ventilation flow rate detector 104 and one fuel gas detector 105 are installed in the cell installation compartment 102. A fuel gas leakage detector is omitted.

As shown in Fig. 2, a fuel storage unit 106 and the respective fuel cell modules 103 are connected through a fuel supply line 107. The fuel supply line 1007 is provided with a shutoff valve 108 that manages and controls the supply of fuel to the respective fuel cell modules 103. The fuel supply line 107 branches in the cell installation compartment 102 to be connected to the respective fuel cell modules 103. The cell installation compartment 102 is ventilated by a ventilation fan 109. Outside air is introduced into the cell installation compartment 102 from an intake port 110.

In the fuel cell power generation system 100 shown in Fig. 1, when a malfunction in the cell installation compartment 102 is detected by the ventilation flow rate detector 104 or the fuel gas detector 105, the shutoff valve 108 is closed. This stops the supply of the fuel gas to all the fuel cell modules 103. Thus, although the fuel cell power generation system 100 shown in Fig. 2 comprises a plurality of the fuel cell modules 103, it cannot continue power generation because all the fuel cell modules 103 are stopped.

On the other hand, in the fuel cell power generation system 1 according to this embodiment, the six fuel cell modules 11 to 13 are installed separately in the respective cell installation compartments 3 to 5. The first supply line 41, which supplies the first fuel cell modules 11 with the fuel gas, is provided with the first shutoff valve 45. The second supply line 42, which supplies the second fuel cell modules 12 with the fuel gas, is provided with the second shutoff valve 46. The third supply line 43, which supplies the third fuel cell modules 13 with the fuel gas, is provided with the third shutoff valve 47. Thus, the supply of the fuel gas to the fuel cell modules 11 to 13 installed in the cell installation compartment 3 to 5 whose malfunction is detected is stopped, but the supply of the fuel gas to the fuel cell modules 11 to 13 installed in the other cell installation compartments 3 to 5 can be continued.

Thus, according to this embodiment, when a malfunction is detected in the cell installation compartment 3 to 5, the shutoff valve 45 to 47 corresponding to the cell installation compartment 3 to 5 having the malfunction can be closed, while the shutoff valves 45 to 47 corresponding to the cell installation compartments 3 to 5 without any detected malfunction can be kept open. Namely, the supply of the fuel gas to the fuel cell modules 11 to 13 installed in the cell installation compartment 3 to 5 having no malfunction can be continued, so that the fuel cell power generation system 1 can continue power generation. This improves the power generation continuity of the fuel cell power generation system 1 comprising a plurality of the fuel cell modules 11 to 13.

In addition, according to this embodiment, the malfunction detection devices 61 to 63 are installed in the respective cell installation compartments 3 to 5. When a malfunction is detected by the first malfunction detection device 61, the control panel 60 closes the first shutoff valve 45. When a malfunction is detected by the second malfunction detection device 62, the control panel 60 closes the second shutoff valve 46. When a malfunction is detected by the third malfunction detection device 63, the control panel 60 closes the third shutoff valve 47. Thus, the shutoff valve 45 to 47 corresponding to the cell installation compartment 3 to 5 whose malfunction is detected can be automatically closed. This can quickly stop the supply of the fuel gas to the fuel cell modules 11 to 13 installed in the cell installation compartment 3 to 5 whose malfunction is detected, to thereby improve safety and robustness of the fuel cell power generation system 1.

In addition, according to this embodiment, when a malfunction in one of the respective cell installation compartments 3 to 5 is detected by the malfunction detection device 61 to 63 and no malfunction is detected in other cell installation compartments 3 to 5, the control panel 60 closes the shutoff valve 45 to 47 corresponding to the cell installation compartment 3 to 5 whose malfunction is detected, and keeps open the shutoff valves 45 to 47 corresponding to the cell installation compartments 3 to 5 without any detected malfunction. This can quickly stop the supply of the fuel gas to the fuel cell modules 11 to 13 installed in the cell installation compartment 3 to 5 whose malfunction is detected, and can continue the supply of the fuel gas to the fuel cell modules 11 to 13 installed in the cell installation compartment 3 to 5 without any detected malfunction. This can improve safety and robustness of the fuel cell power generation system 1 and also can improve the power generation continuity.

In addition, according to this embodiment, the first malfunction detection device 61 includes at least one of the first ventilation flow rate detector 61a, the first fuel gas detector 61b, or the first fuel gas leakage detector 61c. The second malfunction detection device 62 includes at least one of the second ventilation flow rate detector 62a, the second fuel gas detector 62b, or the second fuel gas leakage detector 62c. The third malfunction detection device 63 includes at least one of the third ventilation flow rate detector 63a, the third fuel gas detector 63b, or the third fuel gas leakage detector 63c. This allows the supply of the fuel gas to be stopped in accordance with a safety standard. This can improve safety and robustness of the fuel cell power generation system 1.

In addition, according to this embodiment, the ventilation fan 20 is located on the outlet side of the respective cell installation compartments 3 to 5. This allows the gases in the respective cell installation compartments 3 to 5 to be sucked, so that the pressures in the respective cell installation compartments 3 to 5 can be made lower than a pressure outside the respective cell installation compartments 3 to 5. In this case, even when the fuel gas is detected in the atmosphere of the cell installation compartment 3 to 5, leakage of the fuel gas from the cell installation compartment 3 to 5 to the outside can be suppressed. This results in improvement of safety and robustness of the fuel cell power generation system 1. When the pressures in the respective cell installation compartments 3 to 5 are lowered, airtightness of the respective cell installation compartments 3 to 5 can be relaxed. In this case, the structure of the housing 2 can be simplified and/or manufacture of the housing 2 can be facilitated.

In addition, according to this embodiment, the fuel storage unit 40 is provided outside the respective cell installation compartments 3 to 5. This allows the respective shutoff valves 45 to 47 to be located outside the respective cell installation compartments 3 to 5. Thus, even when the cell installation compartment 3 to 5 has a malfunction, it is easy to operate the shutoff valve 45 to 47 so as to stop the supply of fuel to the corresponding fuel cell modules 11 to 13. This can improve safety and robustness of the fuel cell power generation system 1.

In the aforementioned embodiment, the example in which the shutoff valves 45 to 47 are controlled by the control panel 60 and are operated electrically has been described. However, the present disclosure is not limited thereto, and the shutoff valves 45 to 47 may be operated manually.

In addition, in the aforementioned embodiment, the example in which the fuel cell modules 11 to 13 are installed in the three cell installation compartments 3 to 5 has been described. However, the present disclosure is not limited thereto, and the number of the cell installation compartments is optional as long as it is two or more. In addition, the number of fuel cell modules installed in each cell installation compartment is not limited to two. The number is optional and it may be one or more than two.

In addition, in the aforementioned embodiment, the example in which the fuel cell power generation system 1 comprises the six fuel cell modules 11 to 13 has been described. However, the present disclosure is not limited thereto, and the number of the fuel cell modules may be optional as long as it is two or more.

In addition, in the aforementioned embodiment, the example in which the intake ports 28 to 30 are provided in the respective cell installation compartments 3 to 5 has been described. However, the present disclosure is not limited thereto, and each cell installation compartment 3 to 5 may be provided with an intake duct, not shown. In this case, the intake duct may introduce outside air from outside the respective cell installation compartments 3 to 5 and outside the facility installation compartment 6.

In addition, in the aforementioned embodiment, the example in which the first cell installation compartment 3 and the second cell installation compartment 4 are adjacent to each other, and the second cell installation compartment 4 and the third cell installation compartment 5 are adjacent to each other has been described. However, the present disclosure is not limited thereto.

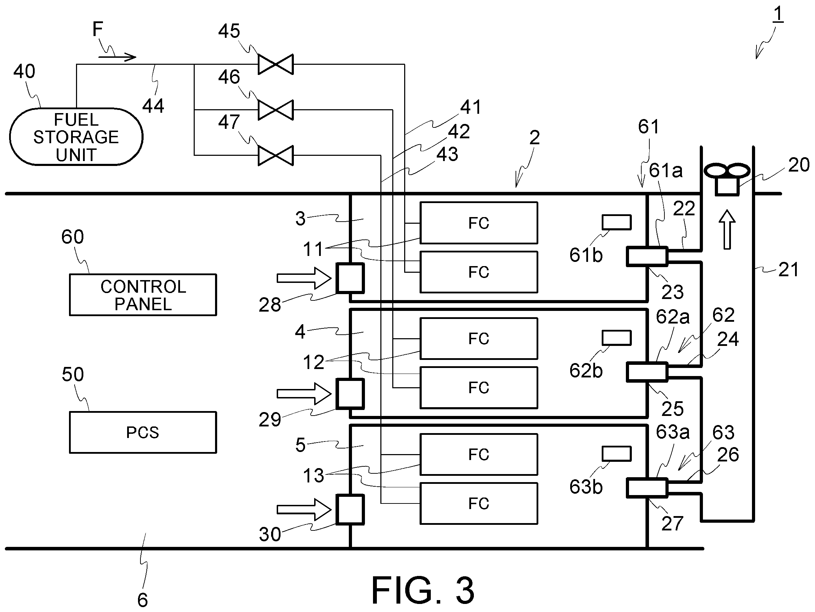

For example, as shown in Fig. 3, the facility installation compartment 6 may be interposed between the first cell installation compartment 3 and the second cell installation compartment 4. In this case, the first cell installation compartment 3 and the second cell installation compartment 4 are partitioned by separate walls of the housing 2. A compartment interposed between the first cell installation compartment 3 and the second cell installation compartment 4 is not limited to the facility installation compartment 6. Since another compartment is interposed between the first cell installation compartment 3 and the second cell installation compartment 4, even when the fuel gas is detected in the atmosphere of one of the first cell installation compartment 3 and the second cell installation compartment 4, leakage of the fuel gas to the other cell installation compartment 3, 4 can be prevented. Thus, in the other cell installation compartment 3, 4, power generation by the fuel cell modules 11, 12 can be continued. This can improve the power generation continuity of the fuel cell power generation system 1 and can also improve safety and robustness of the fuel cell power generation system 1.

Similarly, the facility installation compartment 6 may be interposed between the second cell installation compartment 4 and the third cell installation compartment 5. In this case, the second cell installation compartment 4 and the third cell installation compartment 5 are partitioned by separate walls of the housing 2. A compartment interposed between the second cell installation compartment 4 and the third cell installation compartment 5 is not limited to the facility installation compartment 6. This can similarly improve the power generation continuity of the fuel cell power generation system 1 and can also improve safety and robustness of the fuel cell power generation system 1.

In addition, in the aforementioned embodiment, the example in which ventilation of the first cell installation compartment 3, the second cell installation compartment 4, and the third cell installation compartment 5 is performed by the one ventilation fan 20 has been described. However, the present disclosure is not limited thereto.

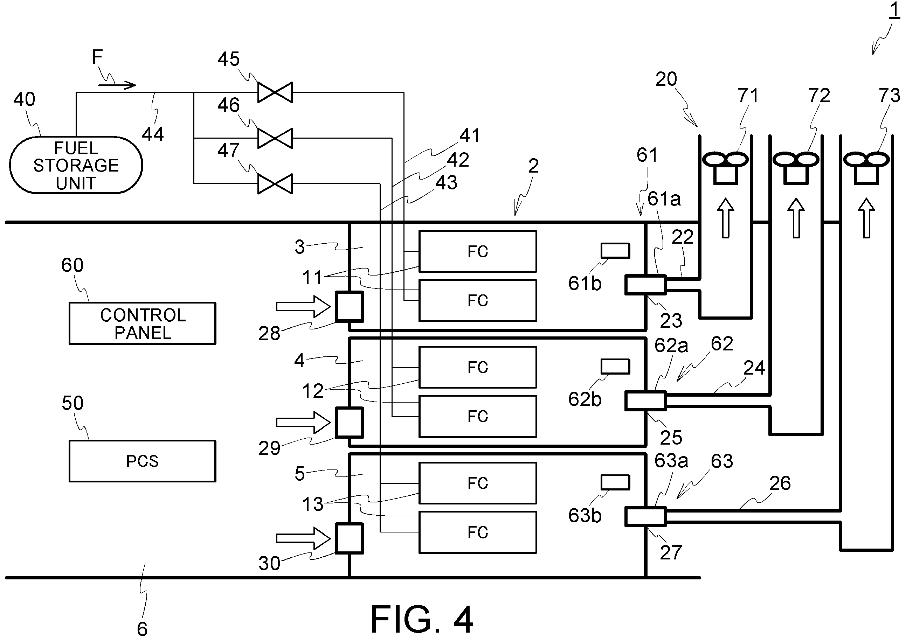

For example, as shown in Fig. 4, the first cell installation compartment 3, the second cell installation compartment 4, and the third cell installation compartment 5 may be ventilated by separate ventilation fans. In the example shown in Fig. 4, a ventilation apparatus includes a first ventilation fan 71, a second ventilation fan 72, and a third ventilation fan 73.

More specifically, the first cell installation compartment 3 may be ventilated by the first ventilation fan 71. The first ventilation fan 71 is an example of a first ventilation apparatus. The first ventilation fan 71 can be located at any position, as long as it is located on the outlet side of the first cell installation compartment 3. For example, the first ventilation fan 71 may be located on the first discharge line 22 or may be located on the first exhaust port 23.

Similarly, the second cell installation compartment 4 may be ventilated by the second ventilation fan 72. The second ventilation fan 72 is an example of a second ventilation apparatus. The second ventilation fan 72 can be located at any position, as long as it is located on the outlet side of the second cell installation compartment 4. For example, the second ventilation fan 72 may be located on the second discharge line 24 or may be located on the second exhaust port 25.

Similarly, the third cell installation compartment 5 may be ventilated by the third ventilation fan 73. The third ventilation fan 73 is an example of a third ventilation apparatus. The third ventilation fan 73 can be located to any position, as long as it is located on the outlet side of the third cell installation compartment 5. For example, the third ventilation fan 73 may be located on the third discharge line 26 or may be located on the third exhaust port 27.

In the example shown in Fig. 4, the first discharge line 22, the second discharge line 24, and the third discharge line 26 are not connected to the common discharge line 21. Thus, the first discharge line 22, the second discharge line 24, and the third discharge line 26 discharge gases independently of one another.

In this manner, since gases of the respective cell installation compartments 3 to 5 are discharged by the corresponding ventilation fans 71 to 73, ventilations of the respective cell installation compartments can be equalized. This can improve safety and robustness of the fuel cell power generation system 1.

In the aforementioned modification example shown in Fig. 4, the example in which each ventilation fan 71 to 73 is located on the outlet side of the corresponding cell installation compartment 3 to 5 has been described. However, the present disclosure is not limited thereto, and each ventilation fan 71 to 73 may be located on the inlet side of the corresponding cell installation compartment 3 to 5. In this case, by driving the ventilation fan 71 to 73, outside air can be introduced into the corresponding cell installation compartment 3 to 5, and the gas in this cell installation compartment 3 to 5 can be discharged. For example, the first ventilation fan 71 may be located on the first intake port 28. Similarly, the second ventilation fan 72 may be located on the second intake port 29, and the third ventilation fan 73 may be located on the third intake port 30.

In addition, in the aforementioned embodiment, the example in which control panel 60 has the first control function by which the shutoff valve 45 to 47, which corresponds to the cell installation compartment 3 to 5 whose malfunction is detected by the malfunction detection device 61 to 63, is individually closed has been described. However, the present disclosure is not limited thereto. The control panel 60 may further have a second control function, in addition to the first control function. The second control function may be a function by which, when a malfunction of at least one of the respective cell installation compartments 3 to 5 is detected, all the shutoff valves 45 to 47 are closed. For example, when fire occurs in any of the cell installation compartments 3 to 5, all the shutoff valves 45 to 47 may be closed.

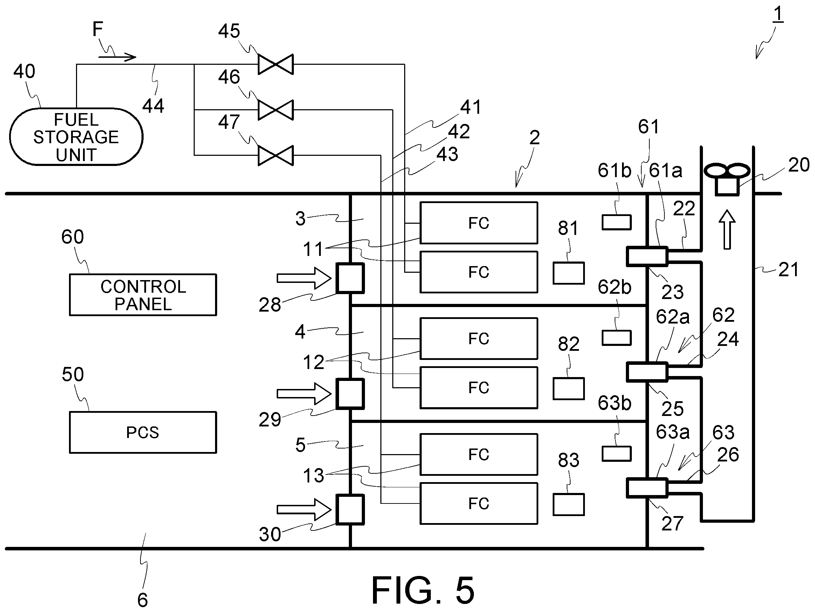

More specifically, as shown in Fig. 5, the first malfunction detection device 61 may further include, as a device corresponding to the second control function, a first fire detector 81 installed in the first cell installation compartment 3. The first fire detector 81 detects occurrence of fire in the first cell installation compartment 3. The second malfunction detection device 62 may further include, as a device corresponding to the second control function, a second fire detector 82 installed in the second cell installation compartment 4. The second fire detector 82 detects occurrence of fire in the second cell installation compartment 4. The third malfunction detection device 63 may further include, as a device corresponding to the second control function, a third fire detector 83 installed in the third cell installation compartment 5. The third fire detector 83 detects occurrence of fire in the third cell installation compartment 5.

When occurrence of fire is detected by at least one of the fire detectors 81 to 83, the control panel 60 closes the respective shutoff vales 45 to 47. For example, when occurrence of fire is detected by the first fire detector 81 installed in the first cell installation compartment 3, the control panel 60 closes all the first to third shutoff valves 47. When fire occurs in the first cell installation compartment 3, the fire may reach the second cell installation compartment 4 and possibly third cell installation compartment 5. Thus, not only the first shutoff valve 45 but also the second shutoff valve 46 and the third shutoff valve 47 are quickly closed, the supply of the fuel gas to the respective fuel cell modules 11 to 13 can be stopped, resulting in improvement of safety and robustness. The same applies to a case in which the second fire detector 82 installed in the second cell installation compartment 4 detects occurrence of fire, and to a case in which the third fire detector 83 installed in the third ell installation compartment 5 detects occurrence of fire.

In the modification example shown in Fig. 5, the example in which, when fire occurs in the cell installation compartment 3 to 5, all the shutoff valves 45 to 47 are closed in accordance with the second control function has been described. However, when a malfunction other than occurrence of fire occurs, the shutoff valves 45 to 47 may be closed in accordance with the second control function.

The embodiment as described above can improve the power generation continuity of the fuel cell power generation system 1 comprising a plurality of fuel cell modules.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A fuel cell power generation system comprising:
a first fuel cell module installed in a first cell installation compartment;
a second fuel cell module installed in a second cell installation compartment partitioned from the first cell installation compartment;
a ventilation apparatus that ventilates the first cell installation compartment and the second cell installation compartment;
a first supply line that supplies the first fuel cell module with a fuel gas;
a second supply line that supplies the second fuel cell module with a fuel gas;
a first shutoff valve provided outside the first cell installation compartment and the second cell installation compartment, the first shutoff valve being capable of shutting off the first supply line; and
a second shutoff valve provided outside the first cell installation compartment and the second cell installation compartment, the second shutoff valve being capable of shutting off the second supply line.

2. The fuel cell power generation system according to claim 1, further comprising:
a first malfunction detection device that detects a malfunction of the first cell installation compartment;
a second malfunction detection device that detects a malfunction of the second cell installation compartment; and
a control unit that controls the first shutoff valve and the second shutoff valve;
wherein:
when a malfunction of the first cell installation compartment is detected by the first malfunction detection device, the control unit closes the first shutoff valve; and
when a malfunction of the second cell installation compartment is detected by the second malfunction detection device, the control unit closes the second shutoff valve.

3. The fuel cell power generation system according to claim 2, wherein
the control unit has a first control function by which, when a malfunction of one of the first cell installation compartment and the second cell installation compartment is detected by the first malfunction detection device or the second malfunction detection device and no malfunction of the other is detected, the corresponding one of the first shutoff valve and the second shutoff valve is closed, and the other shutoff valve is kept open.

4. The fuel cell power generation system according to claim 3, wherein:
the first mal function detection device includes, as a device corresponding to the first control function, at least one of a first ventilation flow rate detector that detects a ventilation flow rate of the first cell installation compartment, a first fuel gas detector that detects a fuel gas in an atmosphere of the first cell installation compartment, or a first fuel gas leakage detector that detects leakage of a fuel gas from the first supply line or the first fuel cell module; and
the second malfunction detection device includes, as a device corresponding to the first control function, at least one of a second ventilation flow rate detector that detects a ventilation flow rate of the second cell installation compartment, a second fuel gas detector that detects a fuel gas in an atmosphere of the second cell installation compartment, or a second fuel gas leakage detector that detects leakage of a fuel gas from the second supply line or the second fuel cell module.

5. The fuel cell power generation system according to any one of claims 1 to 4, wherein
another compartment is interposed between the first cell installation compartment and the second cell installation compartment.

6. The fuel cell power generation system according to any one of claims 1 to 5, wherein
the ventilation apparatus is located on an outlet side of the first cell installation compartment and the second cell installation compartment.

7. The fuel cell power generation system according to claim 6, wherein
a pressure in the first cell installation compartment and a pressure in the second cell installation compartment are lower than a pressure outside the first cell installation compartment and the second cell installation compartment.

8. The fuel cell power generation system according to any one of claims 1 to 7, wherein
the ventilation apparatus includes a first ventilation apparatus that ventilates the first cell installation compartment, and a second ventilation apparatus that ventilates the second cell installation compartment.

9. The fuel cell power generation system according to any one of claims 1 to 8, further comprising a fuel supply source provided outside the first cell installation compartment and the second cell installation compartment, the fuel supply source supplying the first supply line and the second supply line with a fuel gas.

10. The fuel cell power generation system according to any one of claims 2 to 4, wherein
the control unit has a second control function by which, when a malfunction of at least one of the first cell installation compartment or the second cell installation compartment is detected, the first shutoff valve and the second shutoff valve are closed.

11. The fuel cell power generation system according to claim 10, wherein:
the first malfunction detection device includes, as a device corresponding to the second control function, a first fire detector that detects occurrence of fire in the first cell installation compartment; and
the second malfunction detection device includes, as a device corresponding to the second control function, a second fire detector that detects occurrence of fire in the second cell installation compartment.
